# EUROPEAN PATENT SPECIFICATION

(11) **EP 3 341 621 B1**
(45) Date of publication and mention of the grant of the patent: **16.02.2022**
(21) Application number: 16741171.9
(22) Date of filing: 15.06.2016
(51) Int. Cl.: F16B 43/00, B64D 45/02, F16B 33/00

(54) **COATED FASTENERS WITH CONFORMING SEALS**
BESCHICHTETE BEFESTIGUNGSELEMENTE MIT NACHGIEBIGEN DICHTUNGEN
ATTACHES REVÊTUES AVEC JOINTS D'ÉTANCHÉITÉ CONFORMES

(30) Priority: 28.08.2015 US 201562211250 P; 15.09.2015 US 201514854223; 03.03.2016 US 201615059608
(43) Date of publication of application: 04.07.2018
(73) Proprietor: Howmet Aerospace Inc., Pittsburgh, PA 15212 (US)
(72) Inventor: KAMAL, Manish, Seal Beach, CA 90740 (US); HAYLOCK, Luke, Culver City, CA 90230 (US); MULAZIMOGLU, Hasim, La Habra, CA 90631 (US); LIEBSCHER, Andreas, San Diego, CA 92117 (US); RIZZA, Gregory, Westmintor, CA 92683 (US); PINHEIRO, Rodrigo, Riverside, CA 90505 (US); PRACHUMSRI, Wudhidham, Torrance, CA 90503 (US)
(74) Representative: Trinks, Ole
(86) International application number: PCT/US2016/037610
(87) International publication number: WO 2017/039779

(56) References cited:
- EP-A2- 0 248 122
- GB-A- 391 668
- GB-A- 2 212 580
- US-A- 3 239 036

## Description

### Cross-Reference to Related Applications

This application relates to and claims the benefit of commonly-owned, co-pending U.S. Application Serial No. 15/059,608 entitled "FASTENERS WITH CONFORMING SEALS," filed March 3, 2016, which claims the benefit of co-pending U.S. Application Serial No. 14/854,223 entitled "FASTENERS WITH COATED AND TEXTURED PIN MEMBERS," filed September 15, 2015, which claims the benefit of commonly-owned, co-pending U.S. Provisional Patent Application Serial No. 62/051,602, entitled "FASTENERS WITH COATED AND TEXTURED PIN MEMBERS," filed September 17, 2014. The present application also claims the benefit of commonly-owned, co-pending U.S. Provisional Patent Application Serial No. 62/211,250 entitled "CONFORMING CONICAL SEAL FOR FASTENERS," filed August 28, 2015.

### Technical Field of the Invention

The present invention relates to fasteners and, more particularly, to fasteners having coated pin members and conforming conical seals.

### Background of the Prior Art

US 3 239 036 A relates to a high pressure sealed connection and, more particularly, to a sealed fastener connection for two or more structural members.

GB 2 212 580 A relates to aircraft lightning protection systems and more particularly to fasteners for fastening panels to an aircraft substructure especially panels made from composite materials.

GB 391 668 A relates to a sealing washer or ring for use in conjunction with nails, screws, bolts or other shanks adapted to extend into or through an opening, said washer having a boss of tubular form adapted to enter and seal the space between the shank and the edge or wall of the opening and including a flanged top provided with a downwardly directed edge which is adapted to be forced down into contact with the outer surface of the material into which the securing member extends.

Continuous fiber reinforced composites are extensively used in both primary and secondary aircraft components for a variety of applications where light weight, higher strength and corrosion resistance are primary concerns. Composites are typically composed of fine carbon fibers that are oriented at certain directions and surrounded in a supportive polymer matrix. Since the plies of the composite material are arranged at a variety of angles, and depending upon the direction of major loading, the resultant structure is typically a stacked laminated structure, which is highly anisotropic and heterogeneous. A significant portion of the composite structure is fabricated as near net-shape, but is drilled in order to facilitate joining of components using mechanical fasteners. Drilling fastener holes in composite does not compare to the uniformity of aluminum or steel since individual carbon fibers fracture at irregular angles and form microscopic voids between the fastener and the hole. As the cutting tool wears down, there is an increase of surface chipping and an increase in the amount of uncut fibers or resin and delamination. The composite microstructure containing such defects is referred to as "machining-induced micro texture."

In addition to their machining challenges, composite structures in aircrafts are more susceptible to lightning damage compared to metallic structures. Metallic materials, such as aluminum, are very conductive and are able to dissipate the high currents resulting from a lightning strike. Carbon fibers are 100 times more resistive than aluminum to the flow of current. Similarly epoxy, which is often used as a matrix in conjunction with carbon fibers, is 1 million times more resistive than aluminum. The composite structural sections of an aircraft often behave like anisotropic electrical conductors. Consequently, lightning protection of a composite structure is more complex, due to the intrinsic high resistance of carbon fibers and epoxy, the multi-layer construction, and the anisotropic nature of the structure. Some estimates indicate that, on average, each commercial aircraft in service is struck by lightning at least once per year. Aircraft flying in and around thunderstorms are often subjected to direct lightning strikes as well as to nearby lightning strikes, which may produce corona and streamer formations on the aircraft. In such cases, the lightning discharge typically originates at the aircraft and extends outward from the aircraft. While the discharge is occurring, the point of attachment moves from the nose of the aircraft and into the various panels that compromise the skin of the aircraft. The discharge usually leaves the aircraft structure through the empennage.

The protection of aircraft fuel systems against fuel vapor ignition due to lightning is even more critical. Since commercial aircraft contain relatively large amounts of fuel and also include very sensitive electronic equipment, they are required to comply with a specific set of requirements related to the lightning strike protection in order to be certified for operation. It is a well-known fact that fasteners are often the primary pathways for the conduction of the lightning currents from skin of the aircraft to supporting structures such as spars or ribs, and poor electrical contact between the fastener body and the parts of the structure can lead to detrimental fastener arcing or sparking.

To avoid the potential for ignition at the fastener/composite structure interface, some aircraft use fasteners which are in intimate contact with the fastener hole. Intimate contact between bare metallic fasteners and the hole in the composite structure has been known to be the best condition for electrical current dissipation. One approach to achieve fastener-to-composite hole intimacy is to use a sleeved fastener. This approach involves first inserting a close fitting sleeve in the hole. An interferencefit pin is then pulled into the sleeve. This expands the sleeve to bring it in contact with the wall of the hole in the composite structure. Although the sleeve substantially reduces the gap between the fastener and composite structure, it cannot eliminate the small gaps created due to the presence of drilling induced texture across the composite inner-hole surface. This machining induced texture also entraps excess sealant, an insulating material, inhibiting the intimate contact between the sleeve and the hole. This situation becomes even worse as the cutting tool wears, resulting in more and larger machining induced defects.

In order to avoid this condition, the current must dissipate through the carbon fibers exposed along the inner surface of the fastener hole. If the fastener is not in intimate contact with the inside of the hole, the instantaneous joule energy driven by the lightning strike leads to plasma formation within the gap that leads to air/metal vapor ionization which leads to pressure buildup that blows out in the form of a spark or hot particle ejection. The intrinsic high conductivity of metallic fasteners and the large number of fasteners used in aircraft construction combine to create a condition of a high probability of lightning attachment to fasteners.

### Disclosure of the Invention

The present invention relates to a fastener as defined by independent claim 1, wherein further developments of the inventive fastener are covered by sub-claims 2 to 6.

The present invention further relates to a method of making a fastener as defined by independent claim 7, wherein further developments of the inventive method of making a fastener are covered by sub-claims 8 and 9.

The present invention further relates to a method of installing a fastener into a structure as defined by independent claim 10, wherein further developments of the inventive method of installing a fastener into a structure are covered by sub-claims 11 to 15.

According to the claimed invention, the fastener comprises a pin member including an elongated shank having a first end, a second end opposite the first end, a cylindrical shank portion having an outer surface, a head located at the first end of the elongated shank, the head including a bearing surface located on the underside of the head, and a threaded portion located at the second end of the elongated shank; and a seal element attached to the pin member and juxtaposed with the bearing surface of the head of the pin member. In an embodiment, the seal element is made of copper. According to the claimed invention, the seal element includes a sealing portion having a first side and a second side opposite the first side, a lip extending from the first side of the sealing portion. In an embodiment, the lip extends angularly from the sealing portion. In an embodiment, the seal element includes a tubular portion extending axially from the side of the sealing portion. According to the claimed invention, the seal element includes a thickness in a range of about 5 microns to about 100 microns. In an embodiment, the pin member includes a coating. In an embodiment, the coating is a metallic coating. In an embodiment, the metallic coating is selected from the group consisting of gold, silver, and copper. In an embodiment, the coating is made from a material having an electrical conductivity higher than 20% IACS.

In an embodiment, the head of the pin member is coated with the coating. In an embodiment, the outer surface of the cylindrical shank portion of the pin member is coated with the coating. In an embodiment, the head of the pin member and the cylindrical shank portion of the pin member are coated with the coating. In an embodiment, the threaded portion of the pin member and the cylindrical shank portion of the pin member are coated with the coating. In an embodiment, the pin member is fully coated with the coating.

In an embodiment, in combination, a structure; and a fastener installed within the structure, the fastener including a pin member having an elongated shank with a first end, a second end opposite the first end, a cylindrical shank portion having an outer surface, a head located at the first end of the elongated shank, the head including a bearing surface located on the underside of the head, and a threaded portion located at the second end of the elongated shank, and a seal element attached to the pin member and juxtaposed with the bearing surface of the head of the pin member. In an embodiment, the structure includes a composite material. In an embodiment, the structure is substantially made from the composite material. In an embodiment, the structure is partially made from the composite material. In an embodiment, the structure includes a metallic material. In an embodiment, the metallic material is aluminum. In an embodiment, the structure is made substantially from the metallic material. In an embodiment, the structure is made partially from the metallic material.

The claimed invention further relates to a method of making a fastener, comprising the steps of: providing a pin member including an elongated shank having a first end, a second end opposite the first end, a cylindrical shank portion having an outer surface, a head located at the first end of the elongated shank, the head including a bearing surface located on the underside of the head, and a threaded portion located at the second end of the elongated shank; and attaching a seal element to the pin member in a position that is juxtaposed with the bearing surface of the head of the pin member. According to the claimed invention, the seal element includes a thickness in a range of about 5 microns to about 100 microns. In an embodiment, the method includes the step of coating at least a portion of the pin member with a coating. In an embodiment, the coating is a metallic coating. In an embodiment, the metallic coating is selected from the group consisting of gold, silver, and copper. In an embodiment, the coating is made from a material having an electrical conductivity higher than 20% IACS. In an embodiment, the coating step includes coating the head of the pin member with the coating. In an embodiment, the coating step includes coating the outer surface of the cylindrical shank portion with the coating. In an embodiment, the coating step includes coating the head of the pin member and the cylindrical shank portion with the coating. In an embodiment, the coating step includes coating the threaded portion and the cylindrical shank portion of the pin member with the coating. In an embodiment, the coating step includes coating the pin member fully with the coating.

The claimed invention further relates to a method of installing a fastener into a structure, comprising the steps of: providing a fastener having a pin member including an elongated shank having a first end, a second end opposite the first end, a cylindrical shank portion having an outer surface, a head located at the first end of the elongated shank, the head including a bearing surface located on the underside of the head, and a threaded portion located at the second end of the elongated shank and a seal element adapted to be positioned on the pin member such that the seal member is juxtaposed with the bearing surface of the head of the pin member; and installing the fastener into the structure in an installed position. According to the claimed invention, the seal element includes a thickness in a range of about 5 microns to about 100 microns. In an embodiment, the method includes the step of coating at least a portion of the pin member with a coating. In an embodiment, the coating is a metallic coating. In an embodiment, the metallic coating is selected from the group consisting of gold, silver, and copper. In an embodiment, the coating is made from a material having an electrical conductivity higher than 20% IACS. In an embodiment, the coating step includes coating the head of the pin member with the coating. In an embodiment, the coating step includes coating the outer surface of the cylindrical shank portion with the coating. In an embodiment, the coating step includes coating the head and the cylindrical shank portion of the pin member with the coating. In an embodiment, the coating step includes coating the cylindrical shank portion and the threaded portion of the pin member with the coating. In an embodiment, the coating step includes coating the pin member fully with the coating. In an embodiment, the structure includes a composite material. In an embodiment, the structure is substantially made from the composite material. In an embodiment, the structure is partially made from the composite material. In an embodiment, the structure includes a composite material. In an embodiment, the structure is substantially made from the composite material. In an embodiment, the structure is partially made from the composite material. In an embodiment, the structure includes a metallic material. In an embodiment, the metallic material is aluminum. In an embodiment, the structure is made substantially from the metallic material. In an embodiment, the structure is made partially from the metallic material. In an embodiment, the method further comprises the step of trimming the seal element flush with the structure. In an embodiment, the trimming step includes sanding the seal element. In an embodiment, the method further comprises the step of providing a metallic mesh on an outer surface of the structure, wherein when the fastener is in its installed position, the sealing element of the fastener is in direct physical and electrical contact with the metallic mesh. In an embodiment, the seal element includes a sealing portion having a first side and a second side opposite the first side, a lip extending from the first side of the sealing portion, the lip being in direct physical and electrical contact with the metallic mesh. In an embodiment, the metallic mesh is made from copper.

### Brief Description of the Drawings

**FIG. 1** is a side elevational view of an embodiment of a pin member having selected surfaces coated with a material;
**FIG. 2** is a bottom perspective view of an embodiment of a seal;
**FIG. 3** is a bottom perspective view of the pin member and the seal shown in **FIGS. 1** and **2****,** respectively, assembled together;
**FIG. 4** is a photograph of an embodiment of an outer surface of the coated pin member shown in **FIG. 1****;**
**FIG. 5** is a photograph of the topography of an outer surface of an embodiment of the coated pin member shown in **FIG. 1****;**
**FIGS. 6** and **7** are photographs of an embodiment of a pin member having a textured surface;
**FIG. 8** is a side elevational view of an embodiment of a pin member having a conforming seal element;
**FIGS. 9A and 9B** are top plan and side views, respectively, of an embodiment of a conforming seal element;
**FIG. 10** illustrates a screenshot of a stress distribution analysis of an installed fastener;
**FIG. 11** is a micro-photograph of the cross-section of a standard fastener installed in a structure;
**FIG. 12A** is a micro-photograph that illustrates a standard fastener installed in a structure, while **FIG. 12B** is a micro-photograph that illustrates the pin member and the seal element shown in **FIG 8** installed in a structure;
**FIGS. 13A** and **13B** depict photographs showing pre-sanding and post-sanding steps of a structure containing a fastener of **FIG. 8** installed therein;
**FIGS. 14A** and **14B** are schematic illustrations of the fastener of **FIG. 8** before and after a sanding step, respectively;
**FIG. 15A** is a micro-photograph of a standard fastener installed in a structure with an associated copper mesh, while **FIG. 15B** is a micro-photograph of a fastener shown in **FIG 8** installed in a structure with an associated copper mesh;
**FIG. 15C** is graph and associated photographs corresponding to specific data points on the graph showing flushness tolerance between the fastener shown in **FIG. 8** and a standard fastener;
**FIGS. 16A** and **16B** are micro-photographs of a conventional fastener installed in a structure (40 times and 600 times magnification, respectively), while **FIGS. 16C** and **16D** are micro-photographs of a fastener as shown in **FIG. 8** installed in a structure (25 times and 1000 times magnification, respectively);
**FIG. 17A** is a photograph showing the effects of lightning damage on a standard fastener installed in a structure, while **FIG 17B** is a photograph showing the effects of lightning damage on a fastener as shown in **FIG. 8** installed in a structure;
**FIG. 17C** is a micro-photograph showing the effects of lightning damage on a standard fastener installed in a structure, while **FIG 17D** is a micro-photograph showing the effects of lightning damage on a fastener as shown in **FIG. 8** installed in a structure;
**FIG. 18A** through **18F** illustrate a series of simulation results showing reduction of contact resistance and optimized electrical intimacy of the fastener of **FIG.8****;** and
**FIG. 19** is a graph showing electric contact resistivity versus preload force between the fastener shown in **FIG. 8****,** a fastener with a coated pin member, and an anodized fastener.

### Best Mode For Carrying Out The Invention

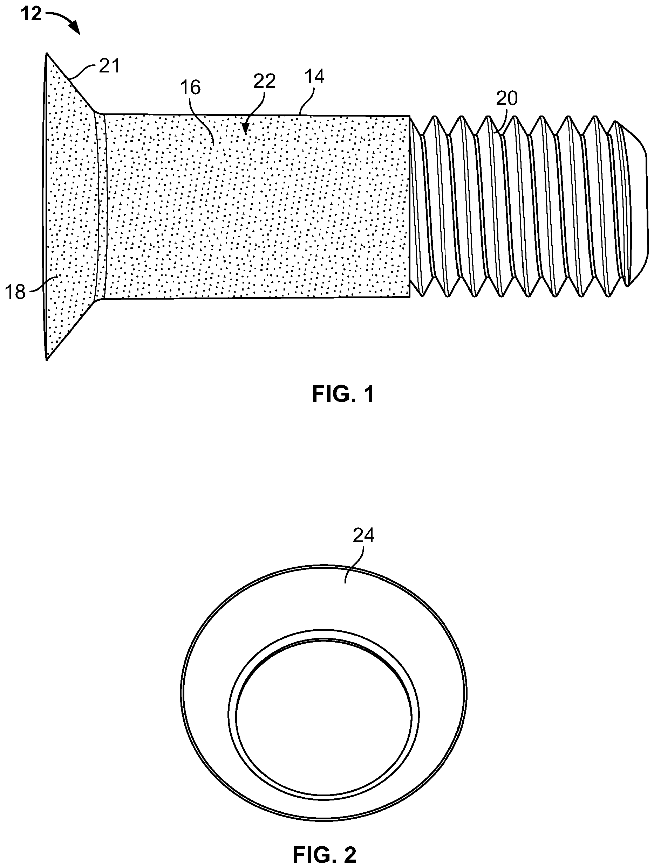

Referring to **FIG. 1****,** in an embodiment, a pin member **12** includes an elongated shank **14** having a cylindrical shank portion **16,** a head **18** at one end of the cylindrical shank portion **16** and a threaded portion **20** at an opposite end of the cylindrical shank portion **16.** In an embodiment, the head **18** is a countersunk head. In an embodiment, the outer surfaces of the head **18,** including an underside surface (e.g., bearing surface) **21** of the head **18,** and the cylindrical shank portion **16** are coated with coating **22.** In an embodiment, the coating **22** is tungsten, In another embodiment, the coating **22** is molybdenum. In another embodiment, the coating **22** is a refractory metal, such as tantalum or niobium. In another embodiment, the coating **22** is a refractory ceramic, such as alumina (Al₂O₃), silica (SiO₂) or other metal oxides. In another embodiment, only the outer surfaces of the head **18** are coated with the coating **22**. In another embodiment, only the outer surface of the cylindrical shank portion **16** is coated with the coating **22**. In an embodiment, the coating **22** lowers electrical contact resistance and reduces probability of arc initiation/damage. In an embodiment, the coating **22** includes a high electrical conductivity (higher than 20% IACS) and be galvanically compatible to a structure (e.g., anodic index less than 1.0V) for corrosion resistance. In an embodiment, the structure includes a composite structure. In another embodiment, the structure includes a metal structure. In another embodiment, the structure includes a fiber metal laminate structure.

In an embodiment, the coating **22** is a thin film coating having a thickness in a range of about one (1) nanometer to about two-hundred (200) microns. In an embodiment, the coating **22** is applied by physical vapor deposition. In another embodiment, the coating **22** is applied by chemical vapor deposition. In another embodiment, the coating **22** is applied by a selective additive process. In another embodiment, the coating **22** is applied by electroplating. In another embodiment, the coating **22** is applied by a spraying process. In another embodiment, the coating **22** is applied by cold spraying. In another embodiment, the coating **22** is applied by thermal spraying. In another embodiment, the coating **22** is applied by plasma coating. In another embodiment, the coating **22** is applied by a sputter deposition process.

In another embodiment, the outer surfaces of the head **18** and the cylindrical shank portion **16** are textured. In an embodiment, the outer surfaces of the head **18** and the cylindrical shank portion **16** of the pin member **12** are textured to conform to the machine-induced micro texture inherent in fastener holes drilled in composite structures, and to provide mechanical interlocking between the pin member **12** and the composite structure. In an embodiment, the textured pin member **12** excavates excess entrapped sealant during installation of the fastener while bringing the fastener in intimate contact with the structure, and, thus, lowering the electrical contact resistance at the interface. The term "intimate contact" as used herein means that the textured outer surface of the pin member **12** is deformed into all or substantially all of voids between the pin member and the composite structure. In another embodiment, only the outer surfaces of the head **18** are textured. In another embodiment, only the outer surface of the cylindrical shank portion **16** is textured.

In an embodiment, the textured surfaces of the pin member **12** are created by surface reshaping processes, such as media blasting. In an embodiment, the textured surfaces of the pin member **12** are grit blasted. In an embodiment, the grit blasting utilizes fine grit glass bead media (100-170 mesh). In an embodiment, the grit blasting is performed until there is full coverage of the outer surfaces of the pin member **12** to be textured. In an embodiment, the grit blasting is performed for at least one minute. In another embodiment, the grit blasting is performed for about one minute. In an embodiment, the grit blasting step is performed twice. In another embodiment, the textured surfaces of the pin member **12** are created by removal processes, such as selective electro-etching, laser etching, abrasive blasting, and mechanical polishing. In another embodiment, the textured surfaces of the pin member **12** are created by chemical etching. In an embodiment, the chemical etching utilizes 50/50 hydrochloric acid (HCI). In an embodiment, the chemical etching is performed for about 30 minutes. In an embodiment, the pin member **12** is rinsed with distilled water for about 15-20 seconds, and dried with forced, room-temperature air for approximately 1 to 2 minutes.

In another embodiment, the surfaces of the head **18** and the cylindrical shank portion **16** of the pin member **12** are coated and textured by a combination of a coating process and a texturing process as described above. In an embodiment, a combination of the coating and texturing processes can be used to develop functional characteristics of the pin member **12,** based on a specific loading pattern thereof. For example, in an embodiment, where the preload is high, the texturing/coating is performed to lower contact resistance. At locations which carry no preload and are not in intimate contact with the composite layer, mitigation of plasma generation and arc formation/damage is desired.

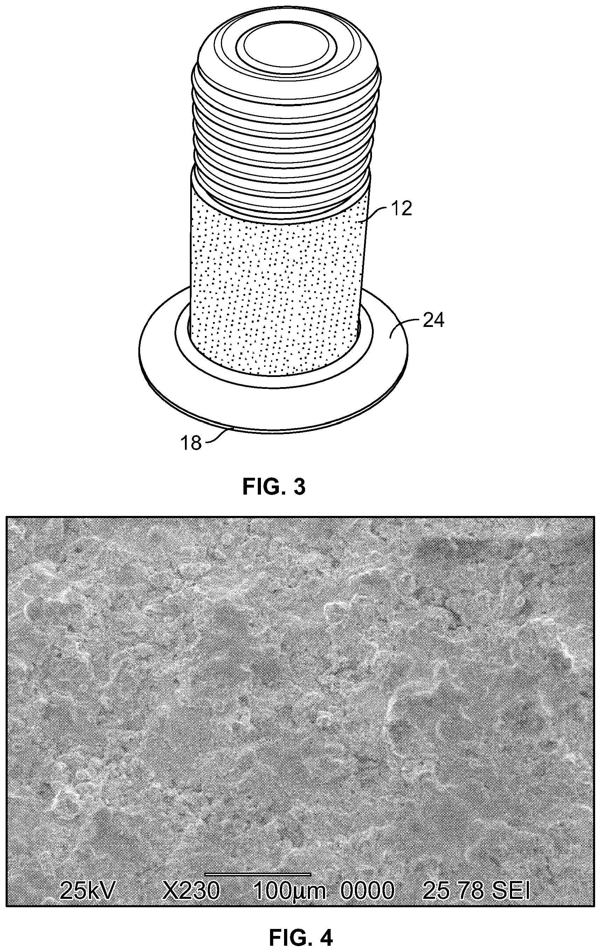

In an embodiment, the pin member **12** is part of a fastener that is adapted to secure a plurality of work pieces of to one another, and is adapted to be installed within aligned holes in such work pieces. In an embodiment, the work pieces are made of a composite material. In another embodiment, the work pieces are made of metal. In another embodiment, the work pieces are made from a fiber metal laminate. In an embodiment, the fastener includes a locking member (not shown in the Figures). In an embodiment, the locking member is a nut. In another embodiment, the locking member is a collar. In an embodiment, a fastener **10** includes the pin member **12** and a seal **24** installed on the bearing surface **21** of the head **18** of the pin member **12,** as shown in **FIGS. 2** and **3****,** and to be discussed in further detail below.

During a lightning strike on an aircraft, the lightning typically attaches to the head **18** of the pin member **12** first. In an embodiment, the coated and/or textured pin member **12** improves contact resistance. In this regard, all solid surfaces are rough on a micro-scale and contact between two engineering bodies occurs at discrete spots produced by the mechanical contact of asperities on the two surfaces. For all solid materials, the true area of contact is a small fraction of the apparent contact area. Electrical current lines get increasingly distorted as the contact spot is approached and flow lines bundle together to pass through "a-spots". An electrical junction consists of a number of contact "a-spots" through which electrical current passes from one connector component to the other and is often characterized by electrical contact resistance of the interface.

When a fastener is installed in a composite structure using a clearance fit, the primary load bearing surface of the pin member **12** as installed is the bearing surface **21** of the head **18**. This is an electrical contact through which it is desired to pass a high frequency, high voltage current and is a significant first line of defense to the lightning strike. If the current has a path to flow easily, no arcing and resultant damage would occur. The pin or bolt to composite interface can prove to be an inefficient electrical contact due to dissimilar materials, presence of electrically insulating films like aircraft sealant and/or hard oxide layers on the surface and irregular cut pattern of the composite. To allow current to flow easily through the pin/bolt to composite interface, the interface contact resistance is desired to be low.

Contact resistance is highly dependent on the applied load on both the surfaces that brings them in contact and electrical and mechanical properties of the material surface in contact. A soft material at the interface with high electrical conductivity lowers the contact resistance, as do higher loads. The load in a pin member joint is provided by the preload and is primarily geometry/design dependent. As described above, the material coating **22** or texturing on the bearing surface **21** of the head **18** is used to both provide a low resistivity material at the contact interface and a soft conforming layer for better contact with the structure. Soft materials with high electrical conductivity, such as copper, gold, silver or other metals/materials can be used to lower contact resistance (see, e.g., the copper seal **24** shown in **FIGS. 2** and **3****).**

The surfaces of the pin member **12,** as described above, can also be textured to enable better intimacy with the surrounding composite layer. As the textured pin member **12** is installed, the textured pin member deforms into the small voids that are created during drilling of the composite layer. As the textured surfaces deform into the voids, they displace the entrapped sealant during fastener installation. The insertion of the pin member **12** causes the excess sealant to be extruded outside the pin member **12**/composite interface. Thus, the textured pin member **12** excavates excess entrapped sealant during installation of the fastener while bringing the pin member **12** in intimate contact with the composite structure. The finish texture of the pin member's **12** surfaces is adjusted to provide a surface micro-roughness (Sa) value in order to increase the level of conformity and mechanical interlocking. In an embodiment, the surface roughness (Sa) is greater than 0.5 micron.

As described above, **FIG. 1** shows an embodiment of a tungsten coated pin member **12.** In an embodiment, plasma coating was used to deposit tungsten on the pin member **12** and achieve a surface roughness (Sa) equal or greater than 7 micron. **FIG. 2** shows the seal **24** and **FIG. 3** shows the pin member **12** with the seal **24** installed on it to promote intimacy with the composite layer on the bearing surface **21** of the head **18.** In an embodiment, the seal **24** is frusto-conical in shape, and is sized and shaped to fit on the bearing surface **21** of the head **18.** In another embodiment, this can also be achieved by copper coating the bearing surface **21** of the head **18.** In another embodiment, the seal **24** is a captive washer. In another embodiment, the seal **24** is coated with a coating. In an embodiment, the coating of the seal **24** includes the coating **22.**

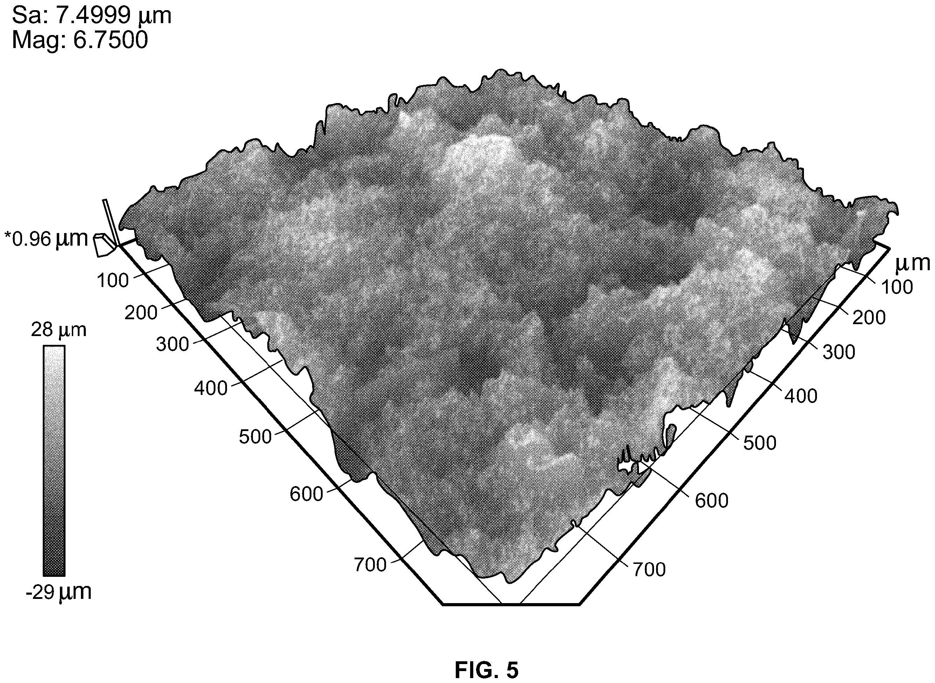

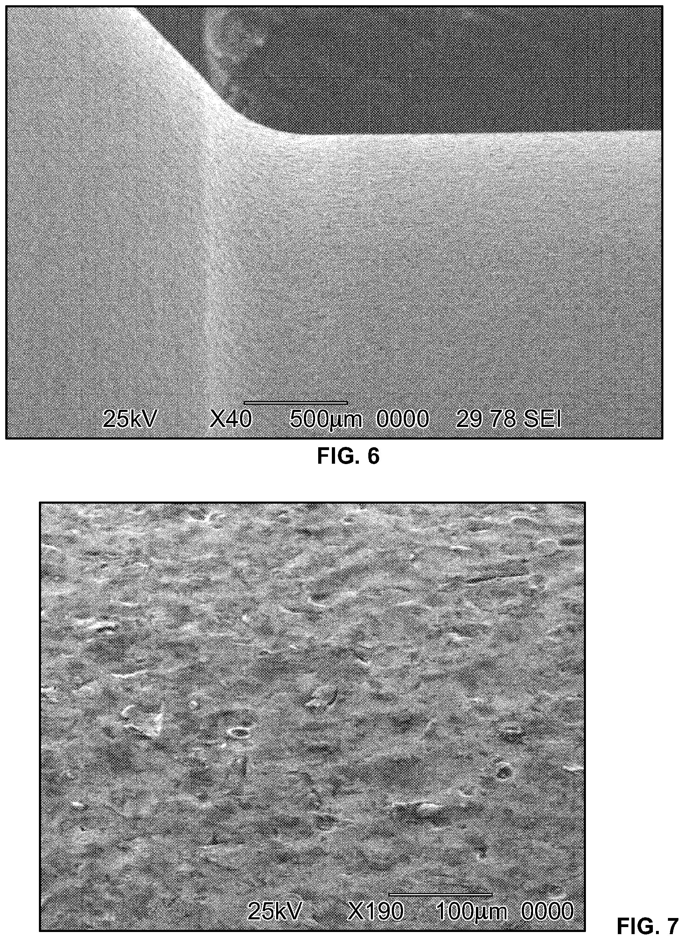

**FIG. 4** shows a photograph of the texture variation of the coated pin member **12,** while **FIG. 5** shows the surface topography of the coated pin member **12.** In an embodiment, the coated surfaces of the pin member **12** have an average surface roughness (Sa) of 7.5 micron. **FIGS. 6** and **7** are photographs of the textured pin member **12** at 40X and 190X magnification, respectively. As can be seen in **FIGS. 6** and **7****,** the textured pin member **12** exhibits a substantially rough finish. In an embodiment, the textured pin member **12** provides improved electrical contact along the textured surfaces of the pin member **12,** which minimizes the dielectric effect caused by the sealant, promotes easier transfer of electric current, reduces the voltage potential across the pin member **12**/composite interface, and thus enables transfer of electric current without any breakdown effects like arcing.

In an embodiment, in a clearance fit hole, there is no preload between the shank **14** of the pin member **12** and the composite layer, and thus electrical contact is relatively poor. Thus, it would be difficult to ensure significant current flow between the pin member **12** and the composite layer. In case sufficient currents are not conducted by the bearing surface **21** of the head **18,** there would be a possibility of arcing at the gap between the shank **14** and the adjacent composite layers. Arc formation under such conditions typically initiates in the metal vapor itself. The presence of a high temperature melting material with high conductivity will ensure that sufficient metal vapor is not present to initiate arcing. Even if arcing is initiated, the volume of plasma will be low. Higher conductivity will also ensure that current is more easily passed between the shank **14** and composite layer if contact is available. As described above, in certain embodiments, materials like tungsten, molybdenum, or refractory metals/ceramics can be used as the coating **22** on the shank **14** of the pin member **12** to ensure reduction in arc damage. Since lightning strikes generate high frequency currents, current would typically flow close to the fastener surface due to "skin effect". The coating on the pin member **12** also helps in this respect that a higher temperature melting point and high conductivity material would carry most of the current lowering the likelihood of fastener melting or plasma generation.

Thus, the coated/textured pin member **12:**
- Improves electrical contact between composite and fastener surface;
- Minimizes fastener arcing during lightning strikes;
- Provides gap filling and mechanical interlocking capabilities;
- Reduces likelihood of plasma formation during arcing around the fastener shank;
- In case arcing occurs in the fastener, reduces the volume of plasma generated to make it easier to be contained.

### Coated Fasteners with Conforming Conical Seals

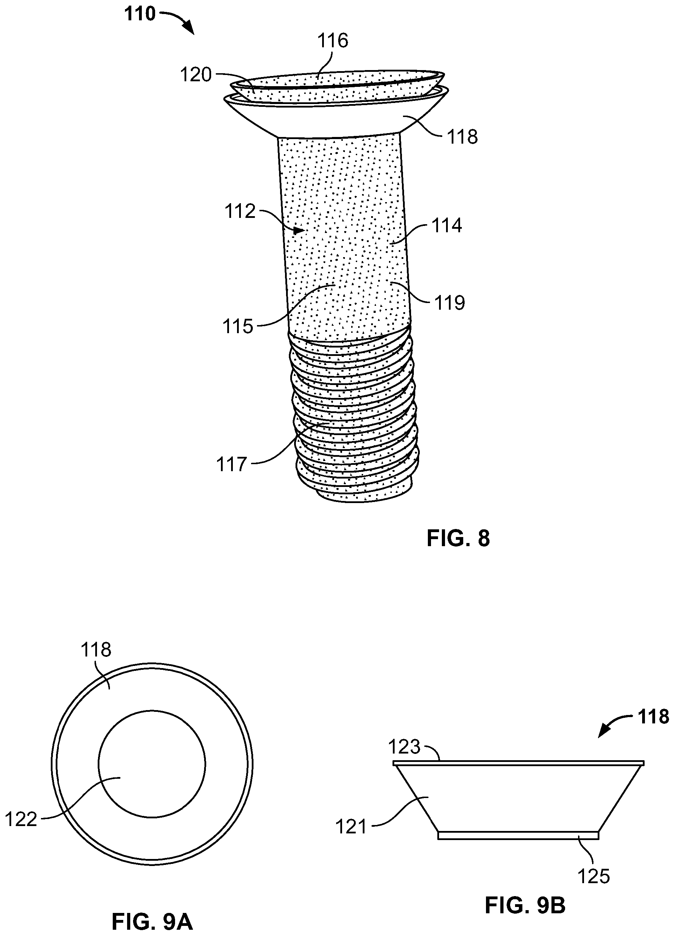

Referring to **FIGS. 8, 9A** and **9B****,** in an embodiment, a fastener **110** includes a pin member **112** having an elongated shank portion **114** with a smooth cylindrical shank portion **115**, a head **116** at one end of the smooth cylindrical shank portion **115** and a threaded portion **117** at an opposite end of the smooth cylindrical shank portion **115**. In an embodiment, the head **116** is a countersunk head. In an embodiment, a locking member is adapted to be installed to the pin member **112** (not shown in the Figures). In an embodiment, the locking member is a threaded nut that engages the threaded portion **117** of the pin member **112.** In another embodiment, the locking member is a collar adapted to be swaged into the lock grooves of the threaded portion **117** of the pin member **112**.

In an embodiment, the pin member **112** is fully coated with a coating **119.** In an embodiment, the coating **119** is a metallic coating. In an embodiment, the coating **119** is a soft, metallic coating. That is, the coating **119** is applied to the elongated shank portion **114,** including the smooth cylindrical shank portion **115** and the threaded portion **117**, and the head **116,** including an underside (e.g., bearing surface **120)** of the head **116.** In an embodiment, the coating **119** is copper. In another embodiment, the coating **119** is silver. In another embodiment, the coating **119** is gold. In other embodiments, the coating **119** is made from a material having a high electrical conductivity, for example, a material having an electrical conductivity higher than 20% IACS.

In other embodiments, the coating **119** can consist of any one of the coatings **22** with respect to the embodiment of the pin member **12**, which are described in detail above.

In another embodiment, the pin member **112** is partially coated with the coating **119.** In an embodiment, the coating **119** is applied to the head **116,** including the underside **120** of the head **116,** of the pin member **116**. In another embodiment, the coating **119** is applied to the head **116** (including the underside **120** of the head **116)** and to the smooth cylindrical shank portion **115** of the pin member **112.** In another embodiment, the coating **119** is applied to the smooth cylindrical shank portion **115** of the pin member **112**. In another embodiment, the coating **119** is applied to the smooth cylindrical shank portion **115** and the threaded portion **117** of the pin member **112**.

In another embodiment, the pin member **112** does not include the coating **119.**

Still referring to **FIGS. 8, 9A** and **9B****,** in an embodiment, a conforming seal element **118** is attached to the elongated shank portion **114** and juxtaposed with the bearing surface **120** of the head **116** of the pin member **112.** In an embodiment, the seal element **118** is separate and distinct from the pin member **112.** In an embodiment, the seal element **118** can be positioned within a hole of a structure and the pin member **112** can then be inserted into the seal element **118** during installation of the fastener **110.** In an embodiment, the seal element **118** is frusto-conical in shape and includes a centrally located, circular-shaped aperture **122** that is sized and shaped to fit around the shank portion **114** of the pin member **112** and juxtaposed with the bearing surface **120** of the head **116** of the pin member **112.** The seal element **118** includes a sealing portion **121**. A lip **123** extends from one side of the sealing portion **121.** In an embodiment, the lip **123** is angled upwardly from the sealing portion **121.** In another embodiment, a tubular portion **125** extends axially from an opposite side of the sealing portion **121.** In an embodiment, the seal element **118** is made from copper. The sealing portion **121** of the seal element **118** has a thickness in a range of about 5 microns to about 100 microns.

It is noted that all solid surfaces of the pin member **112** and a structure **150** in which the fastener **110** is adapted to be installed are rough on a microscopic scale. Surface micro-roughness consist of peaks and troughs whose shape, variations in height, average separation and other geometric characteristics depend on the details of the process used to generate the surfaces. Contact between two engineering bodies occurs at discrete microscopic spots that are the result of mechanical contact of asperities on the two surfaces. For all solid materials, the area of true contact is a small fraction of the nominal contact area for a wide range of normal contact loads.

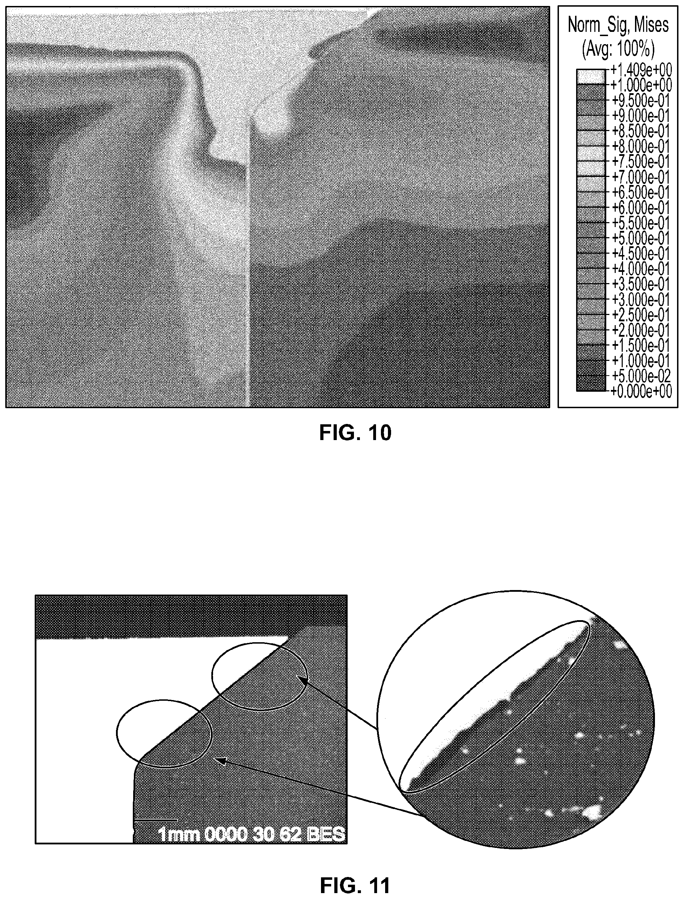

Referring to **FIGS. 10** and **11****,** when mechanical load is exerted through this contact area, the mode of deformation of contact asperities is elastic, plastic, or a mixture of plastic and elastic depending on the local mechanical stresses, and on the properties of the material such as the elastic modulus and hardness. In a bulk electrical interface where the mating components are metals, the contacting surfaces often contain an oxide or other electrical insulating layers. Generally the interface becomes electrically conductive only when electrically insulation films are displaced at the asperities of the contacting surfaces or the potential across the interface exceeds the dielectric strength of the electrically insulation film. For the sake of simplicity in the field of electrical connectors, the discrete spots are often assumed to be circular. This assumption provides an acceptable geometric description of the average contact spots where the roughness topographies of the mating surfaces are isotropic. While this assumption is acceptable for metallic structures, it becomes invalid when the mating surfaces are characterized by directional micro-texture or are clearly anisotropic in nature. The true area of contact between a fastener and the surrounding CFRP structure is a very small percent of the nominal area due to the multi-layered construction and anisotropic nature of CFRP structures, which further complicates quality of the electrical contact between the fastener and surrounding CRFP structure.

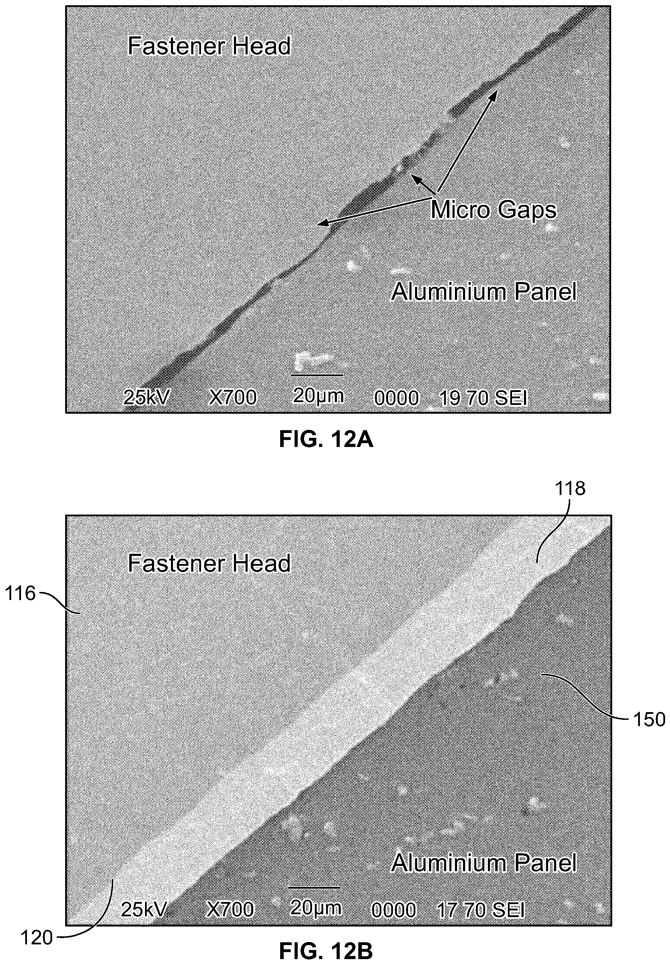

**FIG. 12A** illustrates a standard fastener installed in a structure (e.g., an aluminum panel), which shows microgaps between the head of a pin member and the structure. In an embodiment, with reference to **FIG. 12B****,** the conforming seal element **118** is adapted to maximize the true area of contact between the fastener (e.g., the bearing surface **120** of the head **116** of the pin member **112)** and a structure **150** with minimum mechanical load. In an embodiment, the structure **150** includes a composite material. In another embodiment, the structure **150** is substantially made from a composite material. In another embodiment, the structure **150** is partially made from a composite material. In another embodiment, the structure **150** includes a metallic material. In an embodiment, the metallic material is aluminum. In another embodiment, the structure **150** is made substantially from a metallic material. In another embodiment, the structure **150** is made partially from a metallic material.

In an embodiment, the conforming seal element **118** includes a multi-layer construction with a relatively soft, yet highly electrically conductive base layer, which provides macroscopic conformity, and a softer top layer, which provides microscopic conformity.

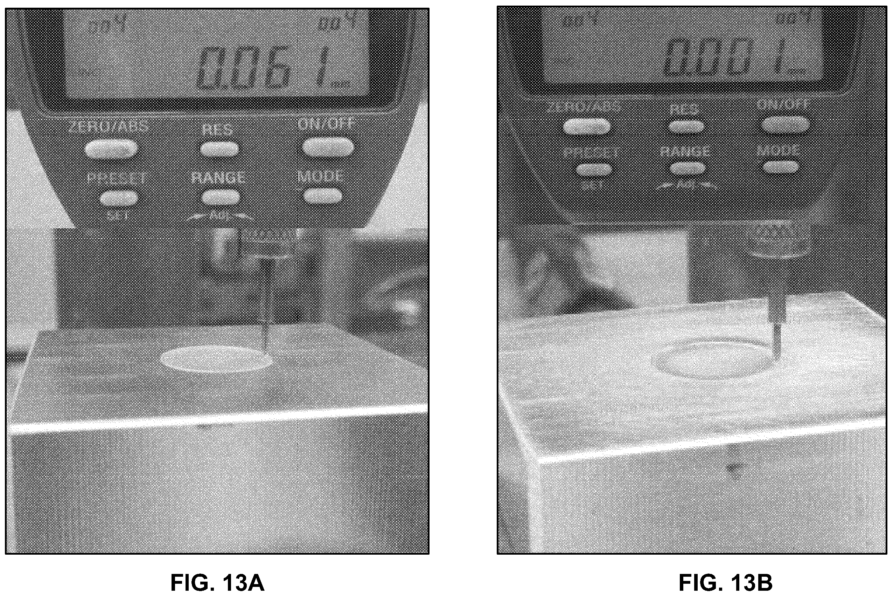

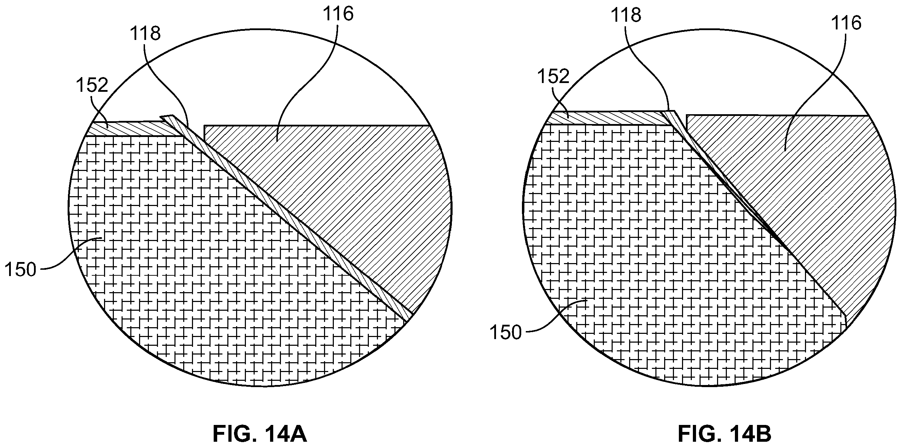

In an embodiment, a method by which the fastener **110** with the seal element is installed is described hereinbelow. In an embodiment, with reference to **FIGS. 8, 9A, 9B****,** **13A, 13B****,** **14A** and **14B****,** the method includes the steps of coating the pin member **112** with the coating **119** (either fully or partially as described above), attaching the seal element **118** to the fastener **110** (e.g., the pin member **112),** and installing the fastener **110** in the structure **150.** In an embodiment, the coating step is not included when the pin member **112** is not coated with the coating **119** as described above. In another embodiment, the seal element **118** can be positioned within a hole of the structure **150** and the pin member **112** can then be inserted into the seal element **118** during installation of the fastener **110.** In an embodiment, with respect to the installation step, a preload to the fastener **110** is provided by the locking member (e.g., nut or collar), and a force is exerted on the structure **150** by the pin member **112** with the seal element **118** positioned between the head **116** of the pin member **112** and the structure **150.** As the seal element **118** conforms to the inherent micro-roughness between the head **116** of the pin member **112** and the structure **150,** a portion of the seal element **118** is extruded upward the edge of the pin member **112** and protrudes above the surface of the structure **150.** With reference to **FIGS. 13A****,** **14B, 14A** and **14B****,** the seal element **118** is trimmed flush with the surface of the structure **150** by sanding the top of the seal element **118** (e.g., proximate to the lip **123)** and, if necessary, the structure **150.** In an embodiment, the sanding step is simultaneous with the preparation of the surface of the structure **150** for the application of paint **152.**

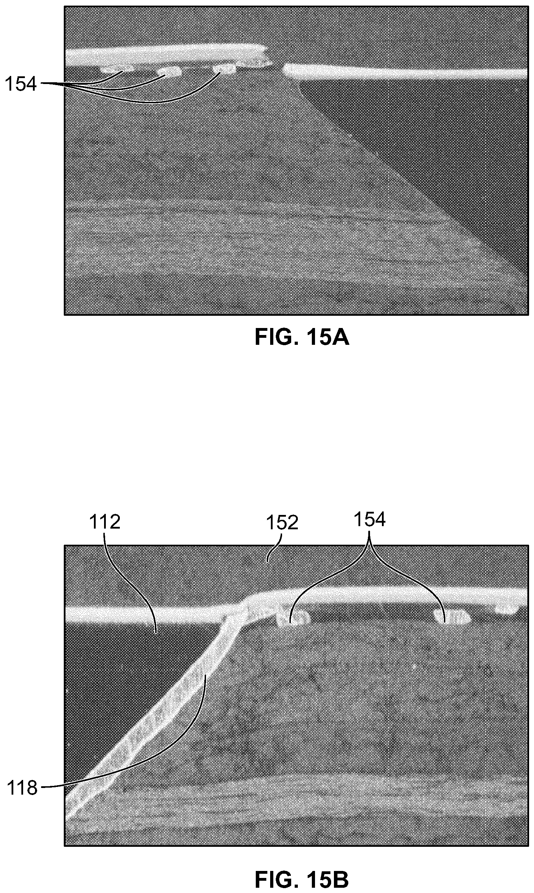

**FIGS. 15A** and **15B** are photographs illustrating the cross-sections of a pin member without the seal element **118 (****FIG. 15A****)** and the pin member **112** with the seal element **118 (****FIG. 15B****).** As shown, the inclusion of the seal element **118** is provided along with a copper mesh **154** and improves paint adhesion.

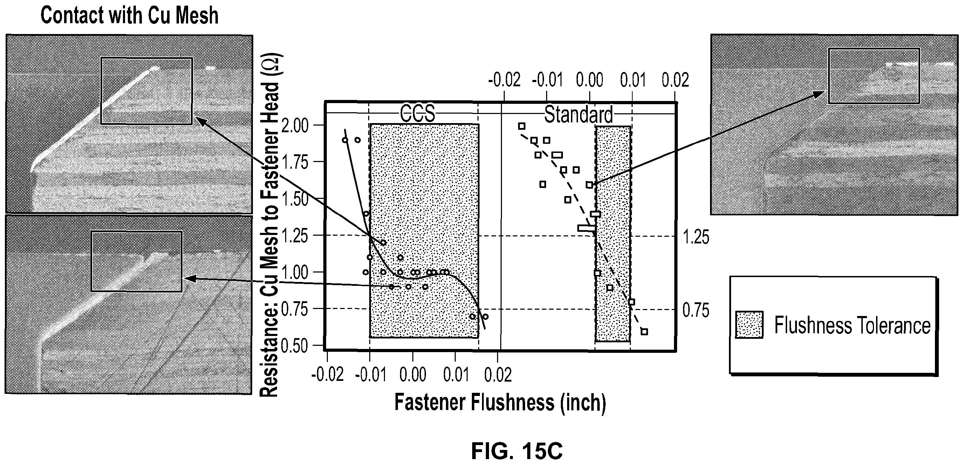

Referring to **FIG. 15C****,** the fastener **110** improves a range of countersink within the structure **150** over which the connection with the copper mesh **152** is maintained. As seen on the graph shown in **FIG. 20,** the flushness tolerance of the fastener **110,** shown on the left, is wider than a baseline fastener without the seal element, as shown on the right.

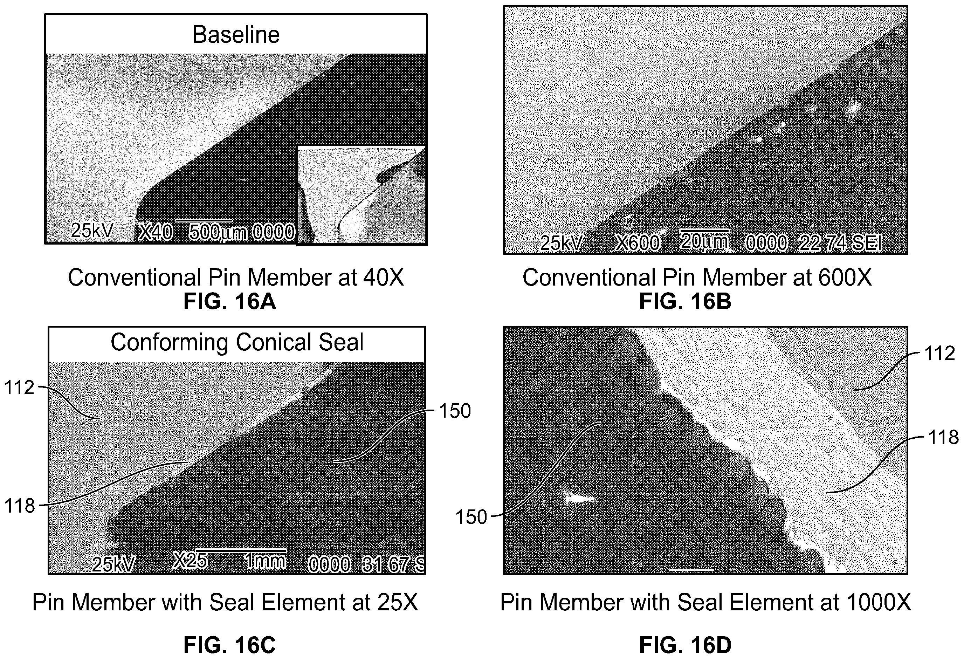

**FIGS. 16A** through **16D** are photographs showing the difference in pin/CFRP interface between a conventional fastener without a seal element **(****FIGS. 16A** and **16B****)** and a fastener with the seal element **18 (****FIGS. 16C** and **16D****).** Micro-level conformance between the seal element **118** and the CFRP structure **50** enhances the current transfer from fastener to the structure **150** and reduce arcing.

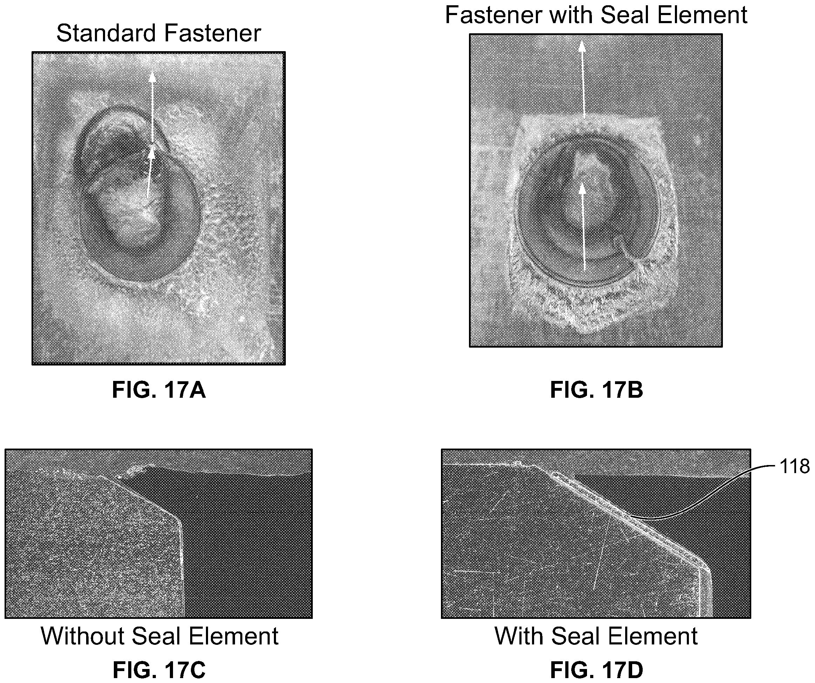

**FIGS. 17A** through **17D** illustrate the differences in the effects of damage in aluminum panels of a fastener without the seal element **118 (****FIGS. 17A** and **17C****)** and a fastener with the seal element **118 (****FIGS. 17B** and **17D****).** The seal element **118** increases the electrical intimacy between the fastener **110** and the structure in the area adjacent to the seal element **118.** As will be described in more detail below, this reduces the magnitude of the electric field near the locking member (e.g., nut or collar).

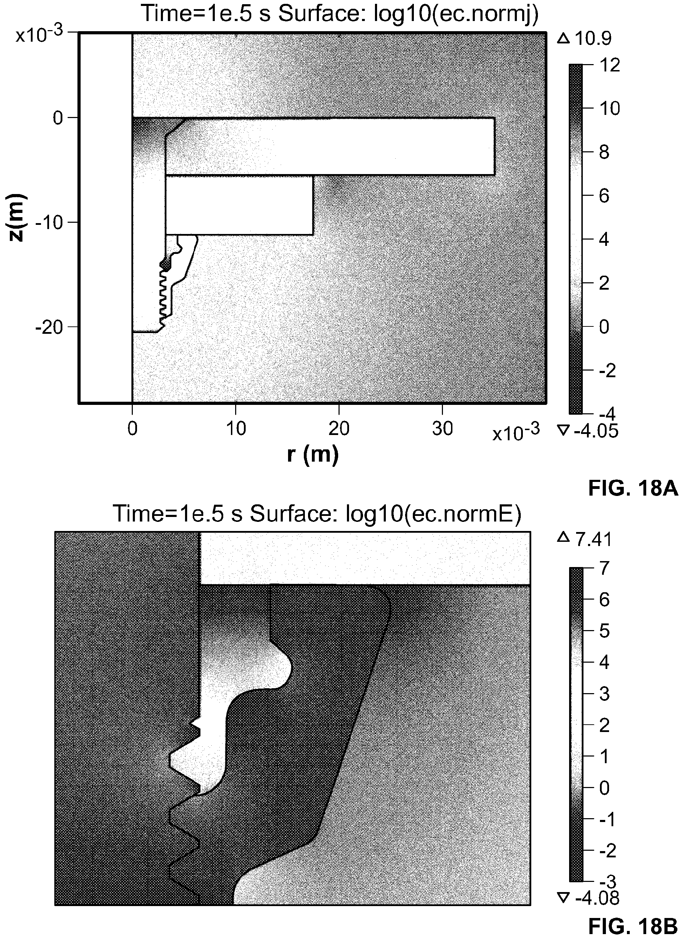

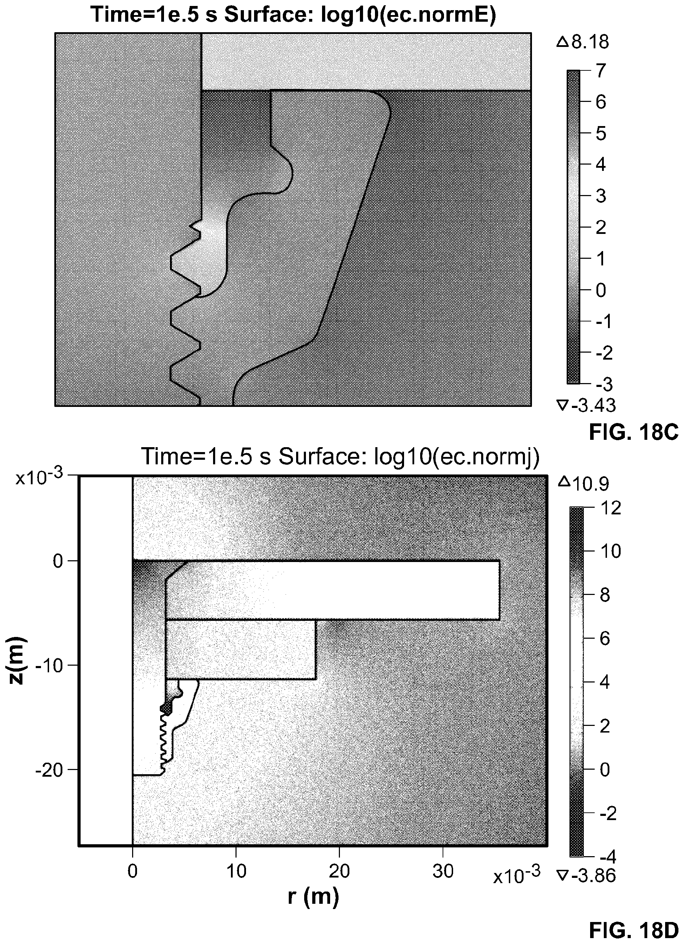

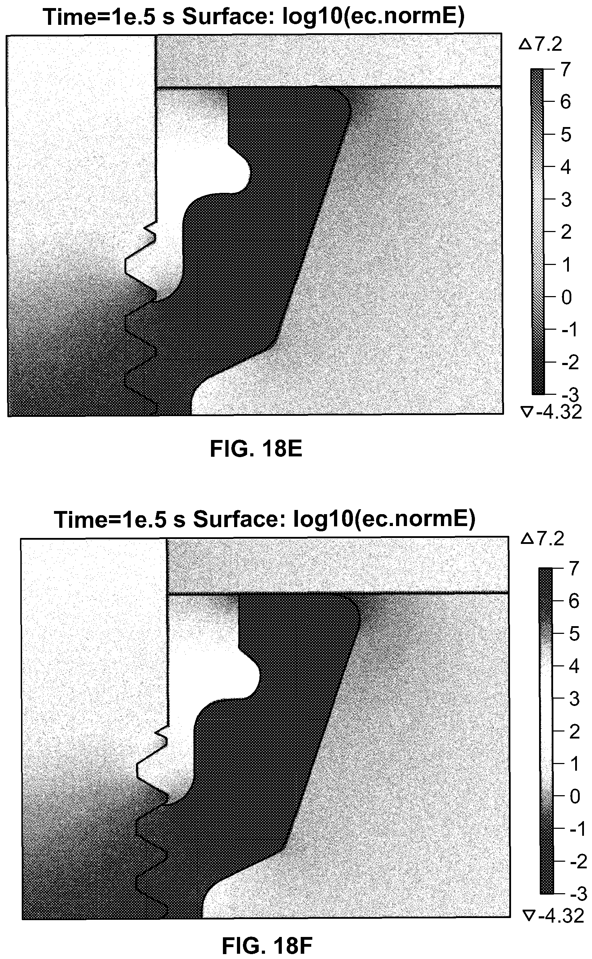

With reference to **FIGS. 18A** through **18F****,** which illustrate simulation results, the seal element **118** reduces contact resistance around the head **116** of the pin member **112** and results in optimized electrical intimacy. This nanoscale conformity leads to improved current transfer into the upper panel of the aircraft structure **150.** During a lightning strike, the external discharge, which attaches to the head **116,** will tend to attach to regions having larger electric fields. In the case of the fastener **110** having the seal element **118,** the electric fields are much lower, resulting in so-called equipotential surfaces with a flatter field profile. This field flattening effect minimizes the amount of structural damage caused by large concentrated flows through sharp edges.

An advantage of the seal element **118** is the large reduction of the charge buildup between the fastener **110** and surrounding materials within the fastener assembly. The time dependent electric potential has a lower peak value, which results in a large reduction of the electric field magnitudes around the bearing surface of the nut region. Typically, large fields around the nut region and sharp edges can result in dielectric breakdown and edge glow phenomenon. The large reduction in electric fields is a direct result of the enhanced current transport.

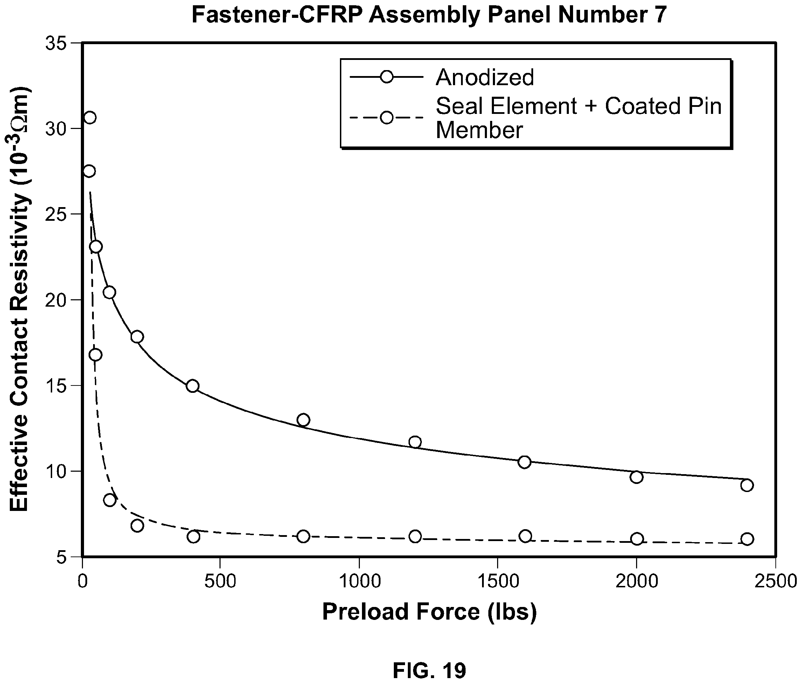

Referring to **FIG. 19****,** the fastener **110** includes a reduced contact resistance. Contact resistivity measurements show current transfer improvement with the fastener **110** having the coating **119** and the seal element **118** over baseline pin members without the coating **119** and the seal element **118.**

It should be understood that the embodiments described herein are merely exemplary and that a person skilled in the art may make many variations and modifications without departing from the scope of the invention. All such variations and modifications are intended to be included within the scope of the claims.

## Claims

1. A fastener (110), comprising:
- a pin member (112) including an elongated shank (114) having a first end, a second end opposite the first end, a cylindrical shank portion (115) having an outer surface, a head (116) located at the first end of the elongated shank (114), the head (116) including a bearing surface (120) located on the underside of the head (116), and a threaded portion (117) located at the second end of the elongated shank (114); and
- a seal element (118) attached to the pin member (112) and juxtaposed with the bearing surface (120) of the head (116) of the pin member (112), wherein the seal element (118) includes a sealing portion (121) having a first side and a second side opposite the first side, and a lip (123) extending from the first side of the sealing portion (121),
wherein the seal element (118) includes a thickness in a range of about 5 µm to about 100 µm.

2. The fastener (110) of claim 1,
wherein the seal element (118) is made of copper; and/or
wherein the lip (123) preferably extends angularly from the sealing portion (121), and wherein the seal element (118) preferably includes a tubular portion extending axially from the side of the sealing portion (121).

3. The fastener (110) of claim 1 or 2,
wherein the pin member (112) includes a coating (119),
wherein the coating (119) is preferably a metallic coating (119) preferably selected from the group consisting of gold, silver, and copper; and/or
wherein the coating (119) is preferably made from a material having an electrical conductivity higher than 20% IACS.

4. The fastener (110) of claim 3,
wherein the head (116) of the pin member (112) is coated with the coating (119); and/or
wherein the outer surface of the cylindrical shank portion (115) of the pin member (112) is coated with the coating (119); and/or
wherein the threaded portion (117) of the pin member (112) is coated with the coating (119); and/or
wherein the pin member (112) is fully coated with the coating (119).

5. In combination, a structure (150); and a fastener (110) installed within the structure (150), the fastener (110) being a fastener (110) in accordance with one of the preceding claims.

6. The combination of claim 5,
wherein the structure (150) includes a composite material, wherein the structure (150) is substantially made from the composite material or wherein the structure (150) is partially made from the composite material; or
wherein the structure (150) includes a metallic material preferably aluminum, wherein the structure (150) is made substantially from the metallic material or wherein the structure (150) is made partially from the metallic material.

7. A method of making a fastener (110), comprising the steps of:
- providing a pin member (112) including an elongated shank (114) having a first end, a second end opposite the first end, a cylindrical shank portion (115) having an outer surface, a head (116) located at the first end of the elongated shank (114), the head (116) including a bearing surface (120) located on the underside of the head (116), and a threaded portion (117) located at the second end of the elongated shank (114); and
- attaching a seal element (118) to the pin member (112) in a position that is juxtaposed with the bearing surface (120) of the head (116) of the pin member (112), wherein the seal element (118) includes a sealing portion (121) having a first side and a second side opposite the first side, and a lip (123) extending from the first side of the sealing portion (121), and wherein the seal element (118) includes a thickness in a range of about 5 µm to about 100 µm.

8. The method of claim 7,
further including the step of coating (119) at least a portion of the pin member (112) with a coating (119),
wherein the coating (119) is preferably a metallic coating (119) preferably selected from the group consisting of gold, silver, and copper; and/or
wherein the coating (119) is preferably made from a material having an electrical conductivity higher than 20% IACS.

9. The method of claim 8,
wherein the coating (119) step includes coating (119) the head (116) of the pin member (112) with the coating (119); and/or
wherein the coating (119) step includes coating (119) the outer surface of the cylindrical shank portion (115) with the coating (119); and/or
wherein the coating (119) step includes coating (119) the threaded portion (117) of the pin member (112) with the coating (119); and/or
wherein the coating (119) step includes coating (119) the pin member (112) fully with the coating (119).

10. A method of installing a fastener (110) into a structure (150), comprising the steps of:
- providing a fastener (110) having a pin member (112) including an elongated shank (114) having a first end, a second end opposite the first end, a cylindrical shank portion (115) having an outer surface, a head (116) located at the first end of the elongated shank (114), the head (116) including a bearing surface (120) located on the underside of the head (116), and a threaded portion (117) located at the second end of the elongated shank (114) and a seal element (118) adapted to be positioned on the pin member (112) such that the seal member is juxtaposed with the bearing surface (120) of the head (116) of the pin member (112), wherein the seal element (118) includes a sealing portion (121) having a first side and a second side opposite the first side and wherein the seal element (118) includes a thickness in a range of about 5 µm to about 100 µm, and a lip (123) extending from the first side of the sealing portion (121); and
- installing the fastener (110) into the structure (150) in an installed position.

11. The method of claim 10,
further including the step of coating (119) at least a portion of the pin member (112) with a coating (119);
wherein the coating (119) is a metallic coating (119) preferably selected from the group consisting of gold, silver, and copper; and/or
wherein the coating (119) is preferably made from a material having an electrical conductivity higher than 20% IACS.

12. The method of claim 11,
wherein the coating (119) step includes coating (119) the head (116) of the pin member (112) with the coating (119); and/or
wherein the coating (119) step includes coating (119) the outer surface of the cylindrical shank portion (115) with the coating (119); and/or
wherein the coating (119) step includes coating (119) the threaded portion (117) of the pin member (112) with the coating (119); and/or
wherein the coating (119) step includes coating (119) the pin member (112) fully with the coating (119).

13. The method of one of claims 10 to 12,
wherein the structure (150) includes a composite material, wherein the structure (150) is substantially made from the composite material or wherein the structure (150) is partially made from the composite material; or
wherein the structure (150) includes a metallic material, in particular, aluminum, wherein the structure (150) is made substantially from the metallic material or wherein the structure (150) is made partially from the metallic material.

14. The method of claim one of claims 10 to 13,
further comprising the step of trimming the seal element (118) flush with the structure (150), wherein the trimming step preferably includes sanding the seal element (118).

15. The method of one of claims 10 to 14,
further comprising the step of providing a metallic mesh on an outer surface of the structure (150), wherein when the fastener (110) is in its installed position, the sealing element of the fastener (110) is in direct physical and electrical contact with the metallic mesh;
wherein the seal element (118) preferably includes a sealing portion (121) having a first side and a second side opposite the first side, a lip (123) extending from the first side of the sealing portion (121), the lip (123) being in direct physical and electrical contact with the metallic mesh;
wherein the metallic mesh is preferably made from copper.

## Patentansprüche

1. Befestigungselement (110), umfassend:
- ein Stiftelement (112) mit einem länglichen Schaft (114) mit einem ersten Ende, einem zweiten Ende gegenüber dem ersten Ende, einen zylindrischen Schaftabschnitt (115) mit einer Außenfläche, einen Kopf (116), der sich am ersten Ende des länglichen Schafts (114) befindet, wobei der Kopf (116) eine Auflagefläche (120) umfasst, die sich an der Unterseite des Kopfes (116) befindet, und einen Gewindeabschnitt (117), der sich am zweiten Ende des länglichen Schafts (114) befindet; und
- ein Dichtungselement (118), das an dem Stiftelement (112) befestigt ist und neben der Auflagefläche (120) des Kopfes (116) des Stiftelements (112) angeordnet ist, wobei das Dichtungselement (118) einen Dichtungsabschnitt (121) mit einer ersten Seite und einer zweiten Seite gegenüber der ersten Seite und eine Lippe (123) beinhaltet, die sich von der ersten Seite des Dichtungsabschnitts (121) erstreckt,
wobei das Dichtungselement (118) eine Dicke in einem Bereich von ungefähr 5 µm bis ungefähr 100 µm aufweist.

2. Befestigungselement (110) nach Anspruch 1,
wobei das Dichtungselement (118) aus Kupfer besteht; und/oder
wobei sich die Lippe (123) vorzugsweise winklig von dem Dichtungsabschnitt (121) erstreckt und wobei das Dichtungselement (118) vorzugsweise einen rohrförmigen Abschnitt umfasst, der sich axial von der Seite des Dichtungsabschnitts (121) erstreckt.

3. Befestigungselement (110) nach Anspruch 1 oder 2,
wobei das Stiftelement (112) eine Beschichtung (119) umfasst,
wobei die Beschichtung (119) vorzugsweise eine metallische Beschichtung (119) ist, die vorzugsweise aus der Gruppe ausgewählt ist, die aus Gold, Silber und Kupfer besteht; und/oder
wobei die Beschichtung (119) vorzugsweise aus einem Material mit einer elektrischen Leitfähigkeit von mehr als 20 % IACS hergestellt ist.

4. Befestigungselement (110) nach Anspruch 3,
wobei der Kopf (116) des Stiftelements (112) mit der Beschichtung (119) beschichtet ist; und/oder
wobei die Außenfläche des zylindrischen Schaftabschnitts (115) des Stiftelements (112) mit der Beschichtung (119) beschichtet ist; und/oder
wobei der Gewindeabschnitt (117) des Stiftelements (112) mit der Beschichtung (119) beschichtet ist; und/oder
wobei das Stiftelement (112) vollständig mit der Beschichtung (119) beschichtet ist.

5. In Kombination eine Struktur (150); und ein Befestigungselement (110), das in der Struktur (150) installiert ist, wobei das Befestigungselement (110) ein Befestigungselement (110) gemäß einem der vorhergehenden Ansprüche ist.

6. Kombination nach Anspruch 5,
wobei die Struktur (150) ein Verbundmaterial umfasst, wobei die Struktur (150) im Wesentlichen aus dem Verbundmaterial besteht, oder
wobei die Struktur (150) teilweise aus dem Verbundmaterial besteht; oder
wobei die Struktur (150) ein metallisches Material, vorzugsweise Aluminium, umfasst, wobei die Struktur (150) im Wesentlichen aus dem metallischen Material besteht oder wobei die Struktur (150) teilweise aus dem metallischen Material besteht.

7. Verfahren zum Herstellen eines Befestigungselements (110), umfassend die folgenden Schritte:
- Bereitstellen eines Stiftelements (112) mit einem länglichen Schaft (114) mit einem ersten Ende, einem zweiten Ende gegenüber dem ersten Ende, einem zylindrischen Schaftabschnitt (115) mit einer Außenfläche, einem Kopf (116), der sich am ersten Ende des länglichen Schafts (114) befindet, wobei der Kopf (116) eine Auflagefläche (120) umfasst, die sich an der Unterseite des Kopfes (116) befindet, und einen Gewindeabschnitt (117), der sich am zweiten Ende des länglichen Schafts (114) befindet; und
- Anbringen eines Dichtungselements (118) an dem Stiftelement (112) in einer Position, die neben der Auflagefläche (120) des Kopfes (116) des Stiftelements (112) liegt, wobei das Dichtungselement (118) einen Dichtungsabschnitt (121) mit einer ersten Seite und einer zweiten Seite gegenüber der ersten Seite und eine Lippe (123) beinhaltet, die sich von der ersten Seite des Dichtungsabschnitts (121) erstreckt, und wobei das Dichtungselement (118) eine Dicke in einem Bereich von ungefähr 5 µm bis ungefähr 100 µm enthält.

8. Verfahren nach Anspruch 7,
ferner umfassend den Schritt des Beschichtens (119) von mindestens einem Abschnitt des Stiftelements (112) mit einer Beschichtung (119),
wobei die Beschichtung (119) vorzugsweise eine metallische Beschichtung (119) ist, die vorzugsweise aus der Gruppe ausgewählt ist, die aus Gold, Silber und Kupfer besteht; und/oder
wobei die Beschichtung (119) vorzugsweise aus einem Material mit einer elektrischen Leitfähigkeit von mehr als 20 % IACS hergestellt ist.

9. Verfahren nach Anspruch 8,
wobei der Schritt des Beschichtens (119) das Beschichten (119) des Kopfes (116) des Stiftelements (112) mit der Beschichtung (119) umfasst; und/oder
wobei der Schritt des Beschichtens (119) das Beschichten (119) der Außenfläche des zylindrischen Schaftabschnitts (115) mit der Beschichtung (119) umfasst; und/oder
wobei der Schritt des Beschichtens (119) das Beschichten (119) des Gewindeabschnitts (117) des Stiftelements (112) mit der Beschichtung (119) umfasst; und/oder
wobei der Schritt des Beschichtens (119) das vollständige Beschichten (119) des Stiftelements (112) mit der Beschichtung (119) umfasst.

10. Verfahren zum Installieren eines Befestigungselements (110) in einer Struktur (150), umfassend die folgenden Schritte:
- Bereitstellen eines Befestigungselements (110) mit einem Stiftelement (112) mit einem länglichen Schaft (114) mit einem ersten Ende, einem zweiten Ende gegenüber dem ersten Ende, einem zylindrischen Schaftabschnitt (115) mit einer Außenfläche, einem Kopf (116), der befindet am ersten Ende des länglichen Schafts (114) sich, wobei der Kopf (116) eine an der Unterseite des Kopfes (116) angeordnete Auflagefläche (120) und einen am zweiten Ende des länglichen Schafts (114) angeordneten Gewindeabschnitt (117) und ein angepasstes Dichtungselement (118) umfasst, das angepasst ist, auf dem Stiftelement (112) so positioniert zu werden, dass das Dichtungselement neben der Auflagefläche (120) des Kopfes (116) des Stiftelements (112) angeordnet ist, wobei das Dichtungselement (118) einen Dichtungsabschnitt (121) mit einer ersten Seite und einer zweiten Seite gegenüber der ersten Seite beinhaltet, und wobei das Dichtungselement (118) eine Dicke in einem Bereich von ungefähr 5 µm bis ungefähr 100 µm und eine Lippe (123) enthält, die sich von der ersten Seite des Dichtungsabschnitts (121) erstreckt; und
- Einbauen des Befestigungselements (110) in die Struktur (150) in einer eingebauten Position.

11. Verfahren nach Anspruch 10,
ferner umfassend den Schritt des Beschichtens (119) mindestens eines Abschnitts des Stiftelements (112) mit einer Beschichtung (119); wobei die Beschichtung (119) eine metallische Beschichtung (119) ist, die vorzugsweise aus der Gruppe ausgewählt ist, die aus Gold, Silber und Kupfer besteht; und/oder
wobei die Beschichtung (119) vorzugsweise aus einem Material mit einer elektrischen Leitfähigkeit von mehr als 20 % IACS hergestellt ist.

12. Verfahren nach Anspruch 11,
wobei der Schritt des Beschichtens (119) das Beschichten (119) des Kopfes (116) des Stiftelements (112) mit der Beschichtung (119) umfasst; und/oder
wobei der Schritt des Beschichtens (119) das Beschichten (119) der Außenfläche des zylindrischen Schaftabschnitts (115) mit der Beschichtung (119) umfasst; und/oder
wobei der Schritt des Beschichtens (119) das Beschichten (119) des Gewindeabschnitts (117) des Stiftelements (112) mit der Beschichtung (119) umfasst; und/oder
wobei der Schritt des Beschichtens (119) das vollständige Beschichten (119) des Stiftelements (112) mit der Beschichtung (119) umfasst.

13. Verfahren nach einem der Ansprüche 10 bis 12,
wobei die Struktur (150) ein Verbundmaterial umfasst, wobei die Struktur (150) im Wesentlichen aus dem Verbundmaterial besteht, oder
wobei die Struktur (150) teilweise aus dem Verbundmaterial besteht; oder
wobei die Struktur (150) ein metallisches Material, insbesondere Aluminium umfasst, wobei die Struktur (150) im Wesentlichen aus dem metallischen Material besteht oder wobei die Struktur (150) teilweise aus dem metallischen Material besteht.

14. Verfahren nach Anspruch einem der Ansprüche 10 bis 13,
das des Weiteren den Schritt des Beschneidens des Dichtungselements (118) bündig mit der Struktur (150) umfasst, wobei der Schritt des Beschneidens vorzugsweise das Schleifen des Dichtungselements (118) umfasst.

15. Verfahren nach einem der Ansprüche 10 bis 14,
ferner umfassend den Schritt des Bereitstellens eines Metallgitters auf einer Außenfläche der Struktur (150), wobei, wenn sich das Befestigungselement (110) in seiner installierten Position befindet, das Dichtungselement des Befestigungselements (110) in direktem physischen und elektrischen Kontakt mit dem Metallgitter steht;
wobei das Dichtungselement (118) vorzugsweise einen Dichtungsabschnitt (121) mit einer ersten Seite und einer zweiten Seite gegenüber der ersten Seite, eine Lippe (123) umfasst, die sich von der ersten Seite des Dichtungsabschnitts (121) erstreckt, wobei die Lippe (123) in direktem physischen und elektrischen Kontakt mit dem Metallgitter steht;
wobei das Metallgewebe vorzugsweise aus Kupfer besteht.

## Revendications

1. Attache (110) comprenant :
- un élément de broche (112) comportant une tige allongée (114) ayant une première extrémité, une seconde extrémité opposée à la première extrémité, une partie de tige cylindrique (115) ayant une surface extérieure, une tête (116) située au niveau de la première extrémité de la tige allongée (114), la tête (116) comportant une surface d'appui (120) située sur la face inférieure de la tête (116), et une partie filetée (117) située au niveau de la seconde extrémité de la tige allongée (114) ; et
- un élément de joint d'étanchéité (118) fixé à l'élément de broche (112) et juxtaposé à la surface d'appui (120) de la tête (116) de l'élément de broche (112), dans laquelle l'élément de joint d'étanchéité (118) comporte une partie d'étanchéité (121) ayant un premier côté et un second côté opposé au premier côté, et une lèvre (123) s'étendant depuis le premier côté de la partie d'étanchéité (121),
dans laquelle l'élément de joint d'étanchéité (118) comporte une épaisseur comprise dans une plage d'environ 5 µm à environ 100 µm.

2. Attache (110) selon la revendication 1,
dans laquelle l'élément de joint d'étanchéité (118) est en cuivre ; et/ou
dans laquelle la lèvre (123) s'étend de préférence angulairement depuis la partie d'étanchéité (121), et dans laquelle l'élément de joint d'étanchéité (118) comporte de préférence une partie tubulaire s'étendant axialement depuis le côté de la partie d'étanchéité (121).

3. Attache (110) selon la revendication 1 ou 2,
dans laquelle l'élément de broche (112) comporte un revêtement (119),
dans laquelle le revêtement (119) est de préférence un revêtement métallique (119) choisi de préférence dans le groupe constitué de l'or, de l'argent et du cuivre ; et/ou
dans laquelle le revêtement (119) est de préférence constitué d'un matériau ayant une conductivité électrique supérieure à 20 % IACS.

4. Attache (110) selon la revendication 3,
dans laquelle la tête (116) de l'élément de broche (112) est revêtue du revêtement (119) ; et/ou
dans laquelle la surface extérieure de la partie de tige cylindrique (115) de l'élément de broche (112) est revêtue du revêtement (119) ; et/ou
dans laquelle la partie filetée (117) de l'élément de broche (112) est revêtue du revêtement (119) ; et/ou
dans laquelle l'élément de broche (112) est entièrement revêtu du revêtement (119).

5. En combinaison, structure (150) ; et attache (110) installée à l'intérieur de la structure (150), l'attache (110) étant une attache (110) selon l'une des revendications précédentes.

6. Combinaison selon la revendication 5,
dans laquelle la structure (150) comporte un matériau composite, dans laquelle la structure (150) est sensiblement constituée du matériau composite ou dans laquelle la structure (150) est partiellement constituée du matériau composite ; ou
dans laquelle la structure (150) comporte un matériau métallique de préférence en aluminium, dans laquelle la structure (150) est sensiblement constituée du matériau métallique ou dans laquelle la structure (150) est partiellement constituée du matériau métallique.

7. Procédé de fabrication d'une attache (110), comprenant les étapes de :
- fourniture d'un élément de broche (112) comportant une tige allongée (114) ayant une première extrémité, une seconde extrémité opposée à la première extrémité, une partie de tige cylindrique (115) ayant une surface extérieure, une tête (116) située au niveau de la première extrémité de la tige allongée (114), la tête (116) comportant une surface d'appui (120) située sur la face inférieure de la tête (116), et une partie filetée (117) située au niveau de la seconde extrémité de la tige allongée (114) ; et
- fixation d'un élément de joint d'étanchéité (118) à l'élément de broche (112) dans une position qui est juxtaposée à la surface d'appui (120) de la tête (116) de l'élément de broche (112), dans lequel l'élément de joint d'étanchéité (118) comporte un partie d'étanchéité (121) ayant un premier côté et un second côté opposé au premier côté, et une lèvre (123) s'étendant depuis le premier côté de la partie d'étanchéité (121), et dans lequel l'élément de joint d'étanchéité (118) comporte une épaisseur comprise dans un plage d'environ 5 µm à environ 100 µm.

8. Procédé selon la revendication 7,
comportant en outre l'étape de revêtement (119) d'au moins une partie de l'élément de broche (112) avec un revêtement (119),
dans lequel le revêtement (119) est de préférence un revêtement métallique (119) choisi de préférence dans le groupe constitué de l'or, de l'argent et du cuivre ; et/ou
dans lequel le revêtement (119) est de préférence constitué d'un matériau ayant une conductivité électrique supérieure à 20 % IACS.

9. Procédé selon la revendication 8,
dans lequel l'étape de revêtement (119) comporte le revêtement (119) de la tête (116) de l'élément de broche (112) avec le revêtement (119) ; et/ou
dans lequel l'étape de revêtement (119) comporte le revêtement (119) de la surface extérieure de la partie de tige cylindrique (115) avec le revêtement (119) ; et/ou
dans lequel l'étape de revêtement (119) comporte le revêtement (119) de la partie filetée (117) de l'élément de broche (112) avec le revêtement (119) ; et/ou
dans lequel l'étape de revêtement (119) comporte le revêtement (119) de l'élément de broche (112) entièrement avec le revêtement (119).

10. Procédé d'installation d'une attache (110) dans une structure (150), comprenant les étapes de :
- fourniture d'une attache (110) ayant un élément de broche (112) comportant une tige allongée (114) ayant une première extrémité, une seconde extrémité opposée à la première extrémité, une partie de tige cylindrique (115) ayant une surface extérieure, une tête (116) située au niveau de la première extrémité de la tige allongée (114), la tête (116) comportant une surface d'appui (120) située sur la face inférieure de la tête (116), et une partie filetée (117) située au niveau de la seconde extrémité de la tige allongée (114) et un élément de joint d'étanchéité (118) conçu pour être positionné sur l'élément de broche (112) de sorte que l'élément de joint d'étanchéité est juxtaposé à la surface d'appui (120) de la tête (116) de l'élément de broche (112), dans lequel l'élément de joint d'étanchéité (118) comporte une partie d'étanchéité (121) ayant un premier côté et un second côté opposé au premier côté et dans lequel l'élément de joint d'étanchéité (118) comporte une épaisseur comprise dans une plage d'environ 5 µm à environ 100 µm, et une lèvre (123) s'étendant depuis le premier côté de la partie d'étanchéité (121) ; et
- installation de l'attache (110) dans la structure (150) dans une position installée.

11. Procédé selon la revendication 10,
comportant en outre l'étape de revêtement (119) d'au moins une partie de l'élément de broche (112) avec un revêtement (119) ;
dans lequel le revêtement (119) est un revêtement métallique (119) de préférence choisi dans le groupe constitué de l'or, de l'argent et du cuivre
; et/ou dans lequel le revêtement (119) est de préférence constitué d'un matériau ayant une conductivité électrique supérieure à 20 % IACS.

12. Procédé selon la revendication 11,
dans lequel l'étape de revêtement (119) comporte le revêtement (119) de la tête (116) de l'élément de broche (112) avec le revêtement (119) ; et/ou
dans lequel l'étape de revêtement (119) comporte le revêtement (119) de la surface extérieure de la partie de tige cylindrique (115) avec le revêtement (119) ; et/ou
dans lequel l'étape de revêtement (119) comporte le revêtement (119) de la partie filetée (117) de l'élément de broche (112) avec le revêtement (119) ; et/ou
dans lequel l'étape de revêtement (119) comporte le revêtement (119) de l'élément de broche (112) entièrement avec le revêtement (119).

13. Procédé selon l'une des revendications 10 à 12,
dans lequel la structure (150) comporte un matériau composite, dans lequel la structure (150) est essentiellement constituée du matériau composite ou dans lequel la structure (150) est partiellement constituée du matériau composite ; ou
dans lequel la structure (150) comporte un matériau métallique, en particulier de l'aluminium, dans lequel la structure (150) est constituée sensiblement du matériau métallique ou dans lequel la structure (150) est constituée partiellement du matériau métallique.

14. Procédé selon l'une des revendications 10 à 13,
comprenant en outre l'étape de rognage de l'élément de joint d'étanchéité (118) au ras de la structure (150), dans lequel l'étape de rognage comporte de préférence le ponçage de l'élément d'étanchéité (118).

15. Procédé selon l'une des revendications 10 à 14,
comprenant en outre l'étape de fourniture d'un treillis métallique sur une surface extérieure de la structure (150), dans lequel lorsque l'attache (110) est dans sa position installée, l'élément de joint d'étanchéité de l'attache (110) est en contact physique et électrique direct avec le treillis métallique ;
dans lequel l'élément de joint d'étanchéité (118) comporte de préférence une partie d'étanchéité (121) ayant un premier côté et un second côté opposé au premier côté, une lèvre (123) s'étendant depuis le premier côté de la partie d'étanchéité (121), la lèvre (123) étant en contact physique et électrique direct avec le treillis métallique ;
dans lequel le treillis métallique est de préférence en cuivre.
